# EUROPÄISCHE PATENTSCHRIFT

(11) **EP 0 939 981 B1**
(45) Veröffentlichungstag und Bekanntmachung des Hinweises auf die Patenterteilung: **29.09.2004**
(21) Anmeldenummer: 97950126.9
(22) Anmeldetag: 06.11.1997
(51) Int. Cl.: H02B 1/01, H02B 1/32

(54) **MONTAGESCHIENE FÜR EINEN SCHALTSCHRANK**
ASSEMBLY RAIL FOR A SWITCHING CABINET
RAIL DE MONTAGE POUR ARMOIRE DE DISTRIBUTION

(30) Priorität: 19.11.1996 DE 19647802
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: PCT/EP1997/006148
(87) Internationale Veröffentlichungsnummer: WO 1998/023001

(56) Entgegenhaltungen:
- EP-A- 0 173 985
- DE-A- 2 043 699
- FR-A- 2 259 458

## Beschreibung

Die Erfindung betrifft eine Montageschiene für einen Schaltschrank, die als Stanz-Biegeteil ausgebildet ist und eine zum Innenraum des Schaltschrankes gerichtete Montagewand aufweist, wobei von der Montagewand seitliche Halterungen abgebogen sind, die mit einer Befestigungsplatte ausgestattet sind, wobei aus der Befestigungsplatte Haken freigestanzt und abgebogen sind, und wobei die Haken in Befestigungsaufnahmen von Rahmenprofilen des Schaltschrankes einführbar sind und wobei die Haken um eine in Längsrichtung der Rahmenprofile verlaufende Biegeachse von der Befestigungsplatte abgebogen sind.

Eine derartige Montageschiene ist aus der FR 2 259 458 bekannt. Diese ist als Stanz-Biegeteil ausgebildet. Sie weist eine vertikale Montagewand auf, von deren beiden längsseitigen Enden Halterungen freigestellt sind. Die Halterungen weisen zwei Haken auf, die quer zur Längserstreckung der Montageschiene abgebogen sind. Einer der Haken ist zur Vorderseite der Montagewand, der andere Haken zur Rückseite der Montagewand gerichtet. Mittels der beiden Haken kann die Montageschiene an einer Profilseite eines vertikalen Rahmenprofiles befestigt werden. Die Profilseite ist hierbei mittels als Bohrungen ausgebildeten Befestigungsaufnahmen ausgestattet. Der zur Vorderseite gerichtete Haken der Montageschiene greift von der Rückseite der Profilseite kommend in eine Befestigungsaufnahme ein. Der zweite Haken greift von der Vorderseite her in die zugeordnete Befestigungsaufnahme ein. Bei dieser Anordnung ist eine ausreichend sichere Befestigung der Montageschiene insbesondere dann nicht gewährleistet, wenn schwere Einbauten an der Montagewand befestigt werden sollen. Es besteht dann die Gefahr, dass sich die Montageschiene von der Profilseite des Rahmens löst.

Die EP 0 173 985 offenbart eine Montageschine mit U-förmigen Querschnitt. An den länggseitigen Enden der Montageschienen sind hakenförmige Befestigungselemente freigestanzt. Zusätzlich weisen die Montageschienen-Enden einen wellenförmigen Befestigungslappen auf.

Eine weitere Montageschiene ist aus dem Firmenprospekt: Rittal Handbuch 27, Seite 178 bekannt. Die Montageschienen sind als U-Profilschienen ausgebildet, die an ihren Stirnseiten mittels der Halterungen verlängert sind. Die Halterung besteht im wesentlichen aus einer Befestigungsplatte, von der die Haken über zwei Abwinklungen abgebogen sind. Hierdurch ist ein quer zur Längsrichtung des vertikalen Rahmenprofiles verlaufender Absatz geschaffen. Mit diesem Absatz stützt sich der Haken an der quadratischen Befestigungsaufnahme des Rahmenprofiles ab. Zur Fixierung an dem Rahmenprofil sind Schrauben in die Befestigungsplatte und das Rahmenprofil eingedreht.

Es ist Aufgabe der Erfindung, eine Montageschiene der eingangs erwähnten Art zu schaffen, die eine stabile Befestigung an solchen Rahmenprofilen ermöglicht, die mit nur schmalen, schlitzförmigen Befestigungsaufnahmen versehen sind.

Die Aufgabe der Erfindung wird mit den Merkmalen des Patentanspruches 1 gelöst. Demgemäß ist es vorgesehen, dass die Haken um eine in Längsrichtung der Rahmenprofile verlaufende Biegeachse von der Montage-Befestigungsplatte abgebogen sind, dass von dieser Biegestelle ausgehend ein Hakenansatz freigestanzt ist, dass die in Längsrichtung der Montagewand verlaufende Breite des Hakens durch die Materialstärke der Befestigungsplatte festgelegt ist, dass der Haken an seinem Hakenansatz eine Schrägung aufweist, mittels derer er ausgehend von dem freien Ende des Hakenansatzes zu der Biegestelle hin in seiner Erstreckung senkrecht zur Längsrichtung des angeschlossenen Rahmenprofiles verbreitert ist, und dass die Schrägung sich an der als Schlitzaufnahme ausgebildeten Befestigungsaufnahme verspannt.

Bei dieser Montageschiene wird die Breite des Hakens alleine durch die Materialstärke der Befestigungsplatte bestimmt. Damit läßt sie sich auch in schlitzförmige Befestigungsaufnahmen einbauen. Diese Befestigungsaufnahmen können dann eine Breite aufweisen, die minimal größer ist als die Materialstärke der Befestigungsplatte. Dadurch, dass der Haken um eine Längsrichtung der Rahmenprofile verlaufende Biegeachse umgebogen ist, ergibt sich zwischen der Biegestelle und dem Hakenansatz eine Stützstelle, mit der sich der Haken an der Befestigungsaufnahme abstützt. Die Biegestelle wird damit bei der Belastung der Montage nicht beansprucht. Alleine in der dafür vorgesehenen Stützstelle wird die Kraft eingeleitet. Hierdurch ist eine stabile Befestigung erreicht. Infolge der Schrägung des Hakenansatzes ist erreicht, dass über den Haken die Halterung bündig an das Rahmengestell herangezogen ist. Alleine mit dieser Verkeilung des Hakens an der Schlitzaufnahme ist die Montageschiene schon sicher befestigt. Als zusätzliche Sicherung kann die Montageschiene auch noch mit dem Rahmenprofil verschraubt werden.

Eine mögliche Erfindungsvariante ist dadurch gekennzeichnet, daß die Befestigungsplatte über einen Übergangsabschnitt an die Montagewand angeschlossen ist, und daß die Haken ausgehend von der dem Übergangsabschnitt abgewandten freien Seite die Befestigungsplatte freigestanzt und rechtwinklig abgebogen sind. Dadurch, daß die Haken von der freien Seiten der Befestigungsplatte ausgestanzt und abgebogen sind, lassen sie sich einfach fertigen. Zudem wird hierdurch erreicht, daß die Haken nahe der freien Seite der Befestigungsplatte angeordnet sind. Eine zugehörige Profilseite des Rahmenprofiles, die die Schlitzaufnahmen trägt, kann entsprechend schmal ausgebildet sein. Damit ist eine platzsparende Verbindung zwischen dem Rahmenprofil und der Montageschiene möglich.

Zur Ausgleichung von Toleranzen kann vorgesehen sein, daß die Haken über federnde Ansätze an die Befestigungsplatte angeschlossen sind. Die federnden Ansätze erlauben zudem, daß eine feste Verspannung zwischen dem Rahmenprofil und der Befestigungsplatte entsteht. Die federnden Ansätze können hierbei dergestalt sein, daß sie, ausgehend von der Stelle, an der der Haken abgebogen ist, aus der Befestigungsplatte freigeschnitten ist und parallel zu dieser verläuft.

Die Erfindung wird im folgenden anhand eines in den Zeichnungen dargestellten Ausführungsbeispiels näher erläutert. Es zeigen:
- Fig. 1: in perspektivischer Seitendarstellung ein aus Rahmenprofilen zusammengesetzes Rahmengestell für einen Schaltschrank,
- Fig. 2: zwei vertikale Rahmenprofile des Rahmengestells gemäß Fig. 1 mit daran anbaubaren Montageschienen und
- Fig. 2A: eine in Fig. 2 mit X gekennzeichnete Detaildarstellung.

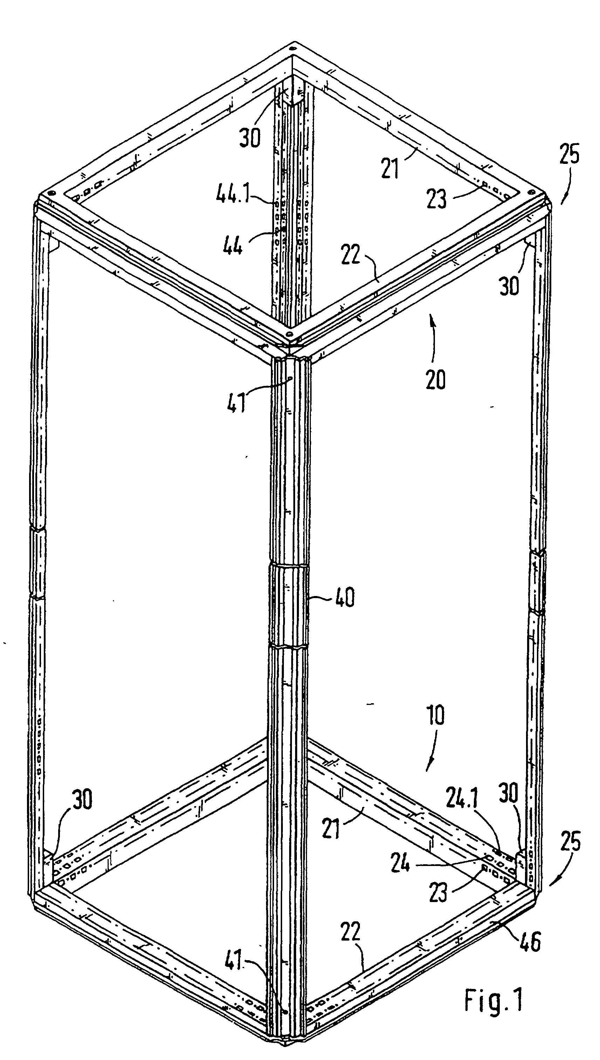

In Fig. 1 ist ein Rahmengestell für einen Schaltschrank gezeigt. Das Rahmengestell ist im wesentlichen aus einem Bodenrahmen 10, einem Deckrahmen 20 und vier vertikalen Rahmenprofilen 40 zusammengesetzt. Die vertikalen Rahmenprofile 40 verbinden den Bodenrahmen 10 mit dem Deckrahmen 20. Boden- und Deckrahmen 10 und 20 sind identisch aufgebaut, so daß sie gegeneinander vertauscht werden können.

Der Boden- und der Deckrahmen 10 und 20 weisen jeweils zwei Tiefen- und zwei Breitenstreben 21, 22 auf. Die Tiefen- und Breitenstreben 21, 22 sind an ihren, dem Innenraum des Rahmengestelles zugekehrten Profilseiten mit Reihen von Befestigungsaufnahmen 23, 24 versehen. Die nach oben gekehrten Profilseiten des Bodenrahmens 10 bzw. die nach unten gerichteten Profilseiten des Deckrahmens 20 sind zusätzlich jeweils mit einer Reihe von Schlitzaufnahmen 24.1 ausgerüstet. Auch die vertikalen Rahmenprofile 40 sind mit zum Innenraum des Rahmengestelles gekehrten Schlitzaufnahmen 44, 44.1 versehen. Zwischen den einzelnen Schlitzaufnahmen 44, 44.1, 24.1 sind Gewindeaufnahmen 44.2 angeordnet.

Die vertikalen Rahmenprofile 40 sind über Verbinder 30 mit dem Boden- bzw. Deckrahmen 10, 20 verbunden. Die Verbinder 30 sind im Bereich von Eckaufnahmen 25 des Boden- bzw. Deckrahmen 10, 20 angeordnet. Die Befestigung der vertikalen Rahmenprofile 40 an dem Verbinder 30 erfolgt beispielsweise mittels einer Verschraubung. Hierzu können die vertikalen Rahmenprofile 40 endseitig mit Schraubaufnahmen 41 versehen sein.

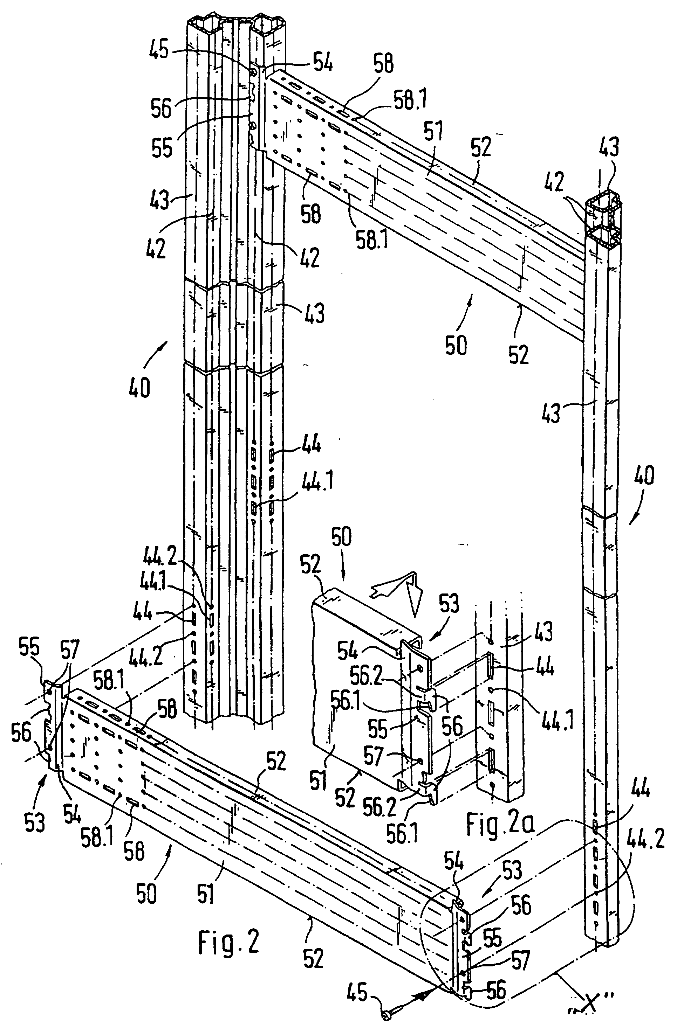

In Fig. 2 sind ausschnittsweise zwei vertikale Rahmenprofile 40 des Rahmengestelles gemäß Fig. 1 gezeigt. Die Rahmenprofile weisen zwei zum Innenraum des Rahmengestelles hin gerichtete Innenwände 42 auf. Die Innenwände 42 stehen zueinander rechtwinklig. Von den Innenwänden 42 sind zwei Profilseiten 43 rechtwinklig nach außen abgekantet. Sowohl die Innenwände 42 als auch die Profilseiten 43 sind mit den Schlitzaufnahmen 44, 44.1 und den Gewindeaufnahmen 44.2 versehen. An diesen Schlitzaufnahmen 44, 44.1 und den Gewindeaufnahmen 44.2 lassen sich Montageschienen 50 befestigen.

Die Montagschienen 50 weisen eine Montagewand 51 auf, die zum Innenraum des Rahmengestelles gerichtet ist. Die Montagewand ist mit mehreren, parallel nebeneinanderliegenden Reihen von Schlitzaufnahmen 58 und Gewindeaufnahmen 58.1 ausgerüstet. Von der Montagewand 51 sind rechtwinklig Abkantungen 52 von den Breitseiten abgekantet. Die Abkantungen 52 weisen ebenfalls jeweils eine Reihe von Schlitzaufnahmen 58 bzw. Gewindeaufnahmen 58.1 auf. Zur Befestigung der Montageschiene 50 an den vertikalen Rahmenprofilen 40 sind Halterungen 53 verwendet. Die Halterungen 53 sind von der Stirnseite der Montagewand 51 abgekantet. Hierzu ist zunächst ein Übergangsabschnitt 54 von der Montagewand 51 abgewinkelt. Der Übergangsabschnitt 54 geht in eine Befestigungsplatte 55 über. Die Befestigungsplatte 55 ist parallel zu der Montagewand 51 ausgerichtet. An ihrer dem Übergangsabschnitt 54 abgelegenen freien Seite sind aus der Befestigungsplatte 55 zwei Haken 56 freigestanzt. Die Haken 56 sind um eine vertikale, in Längsrichtung der Rahmenprofile 40 verlaufende Biegeachse abgebogen.

Diese Einzelheit läßt sich näher der Fig. 2A entnehmen, die einen mit X gekennzeichneten Ausschnitt der Fig. 2 vergrößert darstellt. In der Fig. 2A ist deutlich erkennbar, daß der Haken einen Hakenansatz 56.1 aufweist, der sich von der Biegestelle ausgehend zu seinem freien Ende hin verjüngt. Damit ist eine Schräge gebildet.

Zum Anbringen der Montageschiene 50 an den vertikalen Rahmenprofilen 40 werden die Haken 56 in die Schlitzaufnahmen 44 eingesteckt. Anschließend wird die Montageschiene nach unten gedrückt. Hierbei gleitet die Schräge des Hakenansatzes 56.1 an der inneren Kante der Schlitzaufnahme 44 vorbei. Hierdurch wird die Befestigungsplatte 55 an die Profilseite 43 gezogen. In dieser Endmontagestellung stützt sich die Montageschiene in dem Bereich zwischen der Biegestelle und dem Hakenansatz 56.1 an der Befestigungsaufnahme 44 ab. Für eine zusätzliche Fixierung sind in dem Befestigungsabschnitt Schraubaufnahmen 57 eingebracht, in die Befestigungsschrauben 45 eingeführt und in die Gewindeaufnahmen 44.2 der Profilseiten 43 der vertikalen Rahmenprofile 40 eingeschraubt werden können. Die Haken 56 können direkt oder über Zwischenschaltung eines federnden Ansatzes 56.2 an die Befestigungsplatte 55 angebunden sein. Die Verwendung eines federnden Ansatzes 56.2 hat den Vorteil, daß die Befestigungsplatten federelastisch an den Profilseiten 43 verspannt werden. Hierdurch lassen sich auch beispielsweise Fertigungstoleranzen ausgleichen.

Aus Fig. 2 wird ersichtlich, daß auch an den Innenwänden 42 der vertikalen Rahmenprofile 40 Montageschienen 50 angebracht werden können. Die Montageschienen 50, die hier befestigt werden, sind kürzer als die Montageschienen 50, die sich an den Profilseiten 43 festmachen lassen. Im übrigen entsprechen die Montageschienen 50 in ihrer technischen Ausgestaltung einander.

Zwei an den Profilseiten 43 festgemachte, übereinanderliegende Montageschienen 50 können auch ohne weiteres über eine dritte, vertikal verlaufende Montageschiene 50 miteinander verbunden werden. Die dritte Montageschiene 50 wird dabei in den Schlitzaufnahmen 58 der Montagewand 50 mit ihren Haken 56 festgemacht.

## Patentansprüche

1. Montageschiene für einen Schaltschrank, die als Stanz-Biegeteil ausgebildet ist und eine zum Innenraum des Schaltschrankes gerichtete Montagewand (51) aufweist, wobei von der Montagewand (51) seitliche Halterungen (53) abgebogen sind, die mit einer Befestigungsplatte (55) ausgestattet sind, wobei aus der Befestigungsplatte (55) Haken (56) freigestanzt und abgebogen sind, wobei die Haken (56) in Befestigungsaufnahmen (56) von Rahmenprofilen des Schaltschrankes (40) einführbar sind und wobei die Haken um eine in Längsrichtung der Rahmenprofile verlaufende Biegeachse von der Befestigungsplatte (55) abgebogen sind,
**dadurch gekennzeichnet,**
**dass** von dieser Biegestelle ausgehend ein Hakenansatz (56.1) freigestanzt ist,
**daß** die in Längsrichtung der Montagewand (51) verlaufende Breite des Hakens (56) durch die Materialstärke der Befestigungsplatte (55) festgelegt ist,
**dass** der Haken (56) an seinem Hakenansatz (56.1) eine Schrägung aufweist, mittels derer er ausgehend von dem freien Ende des Hakenansatzes (56.1) zu der Biegestelle hin in seiner Erstreckung senkrecht zur Längsrichtung des angeschlossenen Rahmenprofiles (40) verbreitert ist, dass die Schrägung sich an der als Schlitzaufnahme (44) ausgebildeten Befestigungsaufnahme verspannt.

2. Montageschiene nach Anspruch 1,
**dadurch gekennzeichnet,**
**dass** die Befestigungsplatte (55) über einen Übergangsabschnitt (54) an die Montagewand (51) angeschlossen ist, und
**dass** die Haken (56) ausgehend von der dem Übergangsabschnitt (54) abgewandten freien Seite der Befestigungsplatte (55) freigestanzt und rechtwinklig abgebogen sind.

3. Montageschiene nach einem der Ansprüche 1 bis 2,
**dadurch gekennzeichnet,**
**daß** die Haken (56) über federnde Ansätze (56.2) an die Befestigungsplatte (55) angeschlossen sind.

4. Montageschiene nach Anspruch 3,
**dadurch gekennzeichnet,**
**daß** der federnde Ansatz (56.2), ausgehend von der Stelle, an der der Haken (56) abgebogen ist, aus der Befestigungsplatte(55) freigeschnitten ist und parallel zu dieser verläuft.

## Claims

1. Installation rail for a switch cabinet, which is formed as a punched and bent part and has an installation wall (51) directed towards the interior of the switch cabinet, it being the case that lateral securing means (53) provided with a fastening plate (55) are bent from the installation wall (51), that hooks (56) are punched out of the fastening plate (55) and bent, that the hooks (56) can be introduced into fastening mounts (44) of frame profiles of the switch cabinet, and that the hooks are bent from the fastening plate (55) about a bending axis running in the longitudinal direction of the frame profiles, **characterized in that**, starting from this bending location, a hook extension (56.1) is punched out, **in that** the width of the hook (56) running in the longitudinal direction of the installation wall (51) is determined by the material thickness of the fastening plate (55), **in that** the hook (56) has, on its hook extension (56.1), a bevel by means of which, from the free end of the hook extension (56.1) to the bending location, its extent is widened perpendicularly to the longitudinal direction of the attached frame profile (40), and **in that** the bevel is braced on the fastening mount, which is designed as a slot mount (44).

2. Installation rail according to Claim 1, **characterized in that** the fastening plate (55) is attached to the installation wall (51) via a transition portion (54), and **in that** starting from the free side of the fastening plate (55), which is directed away from the transition portion (54), the hooks (56) are punched out and bent at right angles.

3. Installation rail according to either of Claims 1 and 2, **characterized in that** the hooks (56) are attached to the fastening plate (55) via resilient extensions (56.2).

4. Installation rail according to Claim 3, **characterized in that** the resilient extension (56.2) is cut out of the fastening plate (55) starting from the location at which the hook (56) is bent, and it runs parallel to this fastening plate.

## Revendications

1. Rail de montage pour une armoire électrique, lequel est réalisé sous la forme d'une pièce matricée et pliée et présente une paroi de montage (51) dirigée vers l'espace intérieur de l'armoire électrique, des attaches latérales (53) étant repliées à partir de la paroi de montage (51), lesquelles sont équipées d'une plaque de fixation (55), des crochets (56) étant découpés à la matrice dans la plaque de fixation (55) et repliés, les crochets (56) pouvant être introduits dans des logements de fixation (56) des profilés du cadre de l'armoire électrique (40) et les crochets étant repliés depuis la plaque de fixation (55) autour d'un axe de pliage s'étendant dans le sens longitudinal du profilé du cadre, **caractérisé en ce qu'**un talon de crochet (56.1) est découpé à la matrice à partir de ce point de pliage, que la largeur du crochet (56) qui s'étend dans le sens longitudinal de la paroi de montage (51) est déterminée par l'épaisseur de matériau de la plaque de fixation (55), que le crochet (56) présente au niveau de son talon de crochet (56.1) une partie oblique au moyen de laquelle il s'élargit dans son étendue perpendiculaire au sens longitudinal du profil de cadre (40) raccordé en partant de l'extrémité libre du talon de crochet (56.1) vers le point de pliage, que la partie oblique s'attelle au niveau du logement de fixation réalisé sous la forme d'un logement fendu (44) .

2. Rail de montage selon la revendication 1, **caractérisé en ce que** la plaque de fixation (55) est raccordée à la paroi de montage (51) par le biais d'une section de transition (54) et que les crochets (56) sont découpés à la matrice en partant du côté libre de la plaque de fixation (55) à l'opposé de la section de transition (54) et pliés en angle droit.

3. Rail de montage selon l'une des revendications 1 à 2, **caractérisé en ce que** les crochets (56) sont raccordés à la plaque de fixation (55) par le biais de talons élastiques (56.2).

4. Rail de montage selon la revendication 3, **caractérisé en ce que** le talon élastique (56.2), en partant du point où le crochet (56) est plié, est découpé dans la plaque de fixation (55) et s'étend parallèlement à celle-ci.
